# EUROPEAN PATENT APPLICATION

(11) **EP 4 564 478 A1**
(43) Date of publication of application: **04.06.2025**
(21) Application number: 23846098.4
(22) Date of filing: 26.06.2023
(51) Int. Cl.: H01M 4/525, H01M 4/36, H01M 4/505

(54) **POSITIVE ELECTRODE ACTIVE MATERIAL FOR NON-AQUEOUS ELECTROLYTE SECONDARY BATTERIES, AND NON-AQUEOUS ELECTROLYTE SECONDARY BATTERY**

(30) Priority: 29.07.2022 JP 2022122196
(71) Applicant: Panasonic Intellectual Property Management Co., Ltd., Kadoma-shi, Osaka 571-0057 (JP)
(72) Inventor: KAWADA, Hiroshi, Kadoma-shi, Osaka 571-0057 (JP); FUKUTOME, Daiki, Kadoma-shi, Osaka 571-0057 (JP)
(74) Representative: Novagraaf International SA
(86) International application number: PCT/JP2023/023615
(87) International publication number: WO 2024/024364

(57) **Abstract**

A positive electrode active material 32 according to an example of an embodiment of the present invention contains first composite oxides 33 and second composite oxides 34. The first composite oxides 33 are secondary particles each formed by aggregation of primary particles having an average particle diameter of less than or equal to 0.3 µm, and the second composite oxides 34 includes primary particles of greater than or equal to 0.5 µm. D50a of the first composite oxides 33 is larger than D50b of the second composite oxides 34. The ratio of the mean cross-section area (Sb) of the second composite oxides 34 with respect to the mean cross-section area (Sa) of the primary particles 35 constituting the first composite oxides 33 satisfies the condition 80 ≤ (Sb/Sa) ≤ 600.

## Description

### TECHNICAL FIELD

The present disclosure relates to a positive electrode active material for a non-aqueous electrolyte secondary battery and a non-aqueous electrolyte secondary battery using this positive electrode active material.

### BACKGROUND ART

Properties of a positive electrode active material, which is the main constituent of a non-aqueous electrolyte secondary battery, significantly affect performance such as battery capacity and charge-discharge cycle characteristics, and thereby various investigations have been made on the positive electrode active material. For example, Patent Literatures 1 and 2 disclose art of using a mixture of: secondary particles each formed by aggregation of many primary particles; and single particles composed of one or several (less than or equal to ten) primary particles as the positive electrode active material.

### CITATION LIST

### PATENT LITERATURE

PATENT LITERATURE 1: Japanese Unexamined Patent Application Publication No. 2022-63677
PATENT LITERATURE 2: Japanese Unexamined Patent Application Publication No. 2019-021627

### SUMMARY

However, as a result of investigation by the present inventors, it has been found that the cycle characteristics are improved but the capacity considerably deteriorates when the single particles (also called as "non-aggregated particles") are used as the positive electrode active material. That is, as the art of Patent Literatures 1 and 2, only use of just a mixture of proper secondary particles and single particles as the positive electrode active material cannot sufficiently achieve both the high capacity and high durability (cycle characteristics).

A positive electrode active material for a non-aqueous electrolyte secondary battery according to the present disclosure is a positive electrode active material including: a first lithium-containing transition metal composite oxide; and a second lithium-containing transition metal composite oxide, wherein the first lithium-containing transition metal composite oxide is of secondary particles each formed by aggregation of primary particles having an average particle diameter of less than or equal to 0.3 µm, the second lithium-containing transition metal composite oxide includes primary particles of greater than or equal to 0.5 µm, a median diameter (D50a) on a volumetric basis of the first lithium-containing transition metal composite oxide is larger than a median diameter (D50b) on a volumetric basis of the second lithium-containing transition metal composite oxide (D50a > D50b), and a ratio (Sb/Sa) of an average sectional area (Sb) of the primary particles constituting the second lithium-containing transition metal composite oxide to an average sectional area (Sa) of the primary particles constituting the first lithium-containing transition metal composite oxide is greater than or equal to 80 and less than or equal to 600 (80 ≤ (Sb/Sa) ≤ 600).

A non-aqueous electrolyte secondary battery according to the present disclosure comprises: a positive electrode including the above positive electrode active material; a negative electrode; and a non-aqueous electrolyte.

According to the positive electrode active material of the present disclosure, the non-aqueous electrolyte secondary battery having high capacity and excellent cycle characteristics can be achieved.

### BRIEF DESCRIPTION OF DRAWINGS

FIG. 1 is a sectional view of a non-aqueous electrolyte secondary battery of an example of an embodiment.
FIG. 2 is a view illustrating particle cross sections of a positive electrode active material of an example of an embodiment.

### DESCRIPTION OF EMBODIMENTS

As noted above, it is an important challenge to achieve both the high capacity and the high durability in the non-aqueous electrolyte secondary battery. The present inventors have made intensive investigation to solve this problem, and consequently found that an average sectional area ratio (Sb/Sa) of primary particles each constituting: a first composite oxide being of secondary particles each formed by aggregation of the primary particles having an average particle diameter of less than or equal to 0.3 µm; and a second composite including the primary particles of greater than or equal to 0.5 µm, is an important factor to achieve both the high capacity and the high durability.

As noted above, when the relationship of the average sectional area of the primary particles constituting the first and second composite oxides satisfies the requirement of 80 ≤ (Sb/Sa) ≤ 600, the non-aqueous electrolyte secondary battery having high capacity and excellent durability can be achieved. Such an effect is specifically exhibited only when the requirement of 80 ≤ (Sb/Sa) ≤ 600 is satisfied.

Hereinafter, an example of an embodiment of the positive electrode active material according to the present disclosure and the non-aqueous electrolyte secondary battery using this positive electrode active material will be described in detail with reference to the drawings. Selective combinations of a plurality of embodiments and modified examples, described below, are included in the present disclosure.

Hereinafter, a cylindrical battery in which a wound electrode assembly 14 is housed in a bottomed cylindrical exterior housing can 16 will be exemplified, but an exterior of the battery is not limited to a cylindrical exterior housing can, and may be, for example, a rectangular exterior housing can (rectangular battery) or an exterior composed of laminated sheets including a metal layer and a resin layer (laminate battery). The electrode assembly may be a laminated electrode assembly in which a plurality of positive electrodes and a plurality of negative electrodes are alternately stacked with a separator interposed therebetween.

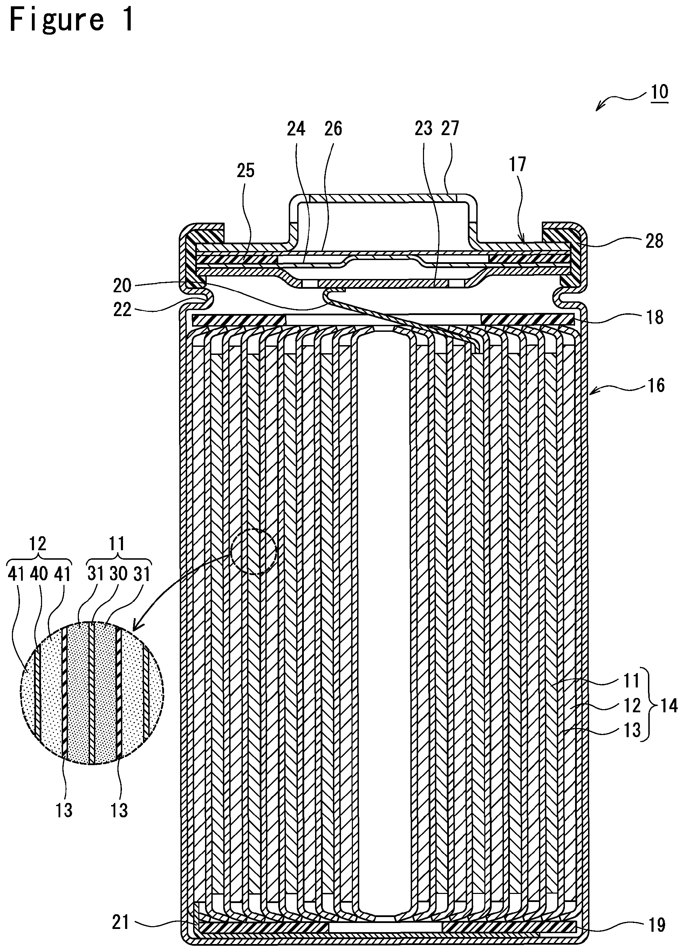

FIG. 1 is a view schematically illustrating a vertical cross section of a non-aqueous electrolyte secondary battery 10 of an example of an embodiment. As illustrated in FIG. 1, the non-aqueous electrolyte secondary battery 10 comprises the wound electrode assembly 14, a non-aqueous electrolyte, and the exterior housing can 16 housing the electrode assembly 14 and the non-aqueous electrolyte. The electrode assembly 14 has a positive electrode 11, a negative electrode 12, and a separator 13, and has a wound structure in which the positive electrode 11 and the negative electrode 12 are spirally wound with the separator 13 interposed therebetween. The exterior housing can 16 is a bottomed cylindrical metallic container having an opening at one side in an axial direction, and the opening of the exterior housing can 16 is sealed with a sealing assembly 17. Hereinafter, for convenience of description, the sealing assembly 17 side of the battery will be described as the upper side, and the bottom side of the exterior housing can 16 will be described as the lower side.

All of the positive electrode 11, negative electrode 12, and separator 13 that constitute the electrode assembly 14 have an elongated band-shape, and are spirally wound to be alternately stacked in a radial direction of the electrode assembly 14. To prevent precipitation of lithium, the negative electrode 12 is formed to be one size larger than the positive electrode 11. That is, the negative electrode 12 is formed to be longer than the positive electrode 11 in a longitudinal direction and a width direction (short direction). Two separators 13 are formed to be one size larger than at least the positive electrode 11, and disposed to sandwich the positive electrode 11. The electrode assembly 14 has: a positive electrode lead 20 connected to the positive electrode 11 by welding or the like; and a negative electrode lead 21 connected to the negative electrode 12 by welding or the like.

Insulating plates 18 and 19 are disposed on the upper and lower sides of the electrode assembly 14, respectively. In the example illustrated in FIG. 1, the positive electrode lead 20 extends through a through hole in the insulating plate 18 toward a side of the sealing assembly 17, and the negative electrode lead 21 extends along an outside of the insulating plate 19 toward the bottom side of the exterior housing can 16. The positive electrode lead 20 is connected to a lower surface of an internal terminal plate 23 of the sealing assembly 17 by welding or the like, and a cap 27, which is a top plate of the sealing assembly 17 electrically connected to the internal terminal plate 23, becomes a positive electrode terminal. The negative electrode lead 21 is connected to a bottom inner surface of the exterior housing can 16 by welding or the like, and the exterior housing can 16 becomes a negative electrode terminal.

As noted above, the exterior housing can 16 is a bottomed cylindrical metallic container having an opening at one side in an axial direction. A gasket 28 is provided between the exterior housing can 16 and the sealing assembly 17 to achieve sealability inside the battery and insulability between the exterior housing can 16 and the sealing assembly 17. On the exterior housing can 16, a grooved portion 22 in which part of a side wall thereof projects inside for supporting the sealing assembly 17 is formed. The grooved portion 22 is preferably formed in a circular shape along a circumferential direction of the exterior housing can 16, and supports the sealing assembly 17 with the upper surface thereof. The sealing assembly 17 is fixed on the upper part of the exterior housing can 16 with the grooved portion 22 and with an end of the opening of the exterior housing can 16 caulked to the sealing assembly 17.

The sealing assembly 17 has a stacked structure of the internal terminal plate 23, a lower vent member 24, an insulating member 25, an upper vent member 26, and the cap 27 in this order from the electrode assembly 14 side. Each member constituting the sealing assembly 17 has, for example, a disk shape or a ring shape, and each member except for the insulating member 25 is electrically connected to each other. The lower vent member 24 and the upper vent member 26 are connected at respective central parts thereof, and the insulating member 25 is interposed between the respective circumferential parts of the vent members 24 and 26. If the battery causes abnormality to increase the internal pressure, the lower vent member 24 is deformed so as to push the upper vent member 26 up toward the cap 27 side and breaks, and thereby a current pathway between the lower vent member 24 and the upper vent member 26 is cut off. If the internal pressure further increases, the upper vent member 26 breaks, and gas is discharged through the cap 27 opening.

Hereinafter, the positive electrode 11, the negative electrode, 12 and the separator 13, which constitute the electrode assembly 14, specifically the positive electrode active material constituting the positive electrode 11, will be described.

### [Positive Electrode]

The positive electrode 11 comprises a positive electrode core 30 and a positive electrode mixture layer 31 formed on a surface of the positive electrode core 30. For the positive electrode core 30, a foil of a metal stable within a potential range of the positive electrode 11, such as aluminum and an aluminum alloy, a film in which such a metal is disposed on a surface layer, and the like may be used. An example of the positive electrode core 30 is foil of aluminum or an aluminum alloy having a thickness of greater than or equal to 10 µm and less than or equal to 20 µm. The positive electrode mixture layer 31 includes the positive electrode active material, a conductive agent, and a binder, and preferably formed on both the surfaces of the positive electrode core 30. A thickness of the positive electrode mixture layer 31 is, for example, greater than or equal to 30 µm and less than or equal to 100 µm on one side of the positive electrode core 30. The positive electrode 11 may be produced by, for example, applying a positive electrode mixture slurry including the positive electrode active material, the conductive agent, the binder, and the like on the positive electrode core 30, and drying and then compressing the coating film to form the positive electrode mixture layers 31 on both the surfaces of the positive electrode core 30.

Examples of the conductive agent included in the positive electrode mixture layer 31 include carbon materials such as carbon black such as acetylene black and Ketjenblack, graphite, carbon nanotube, carbon nanofiber, and graphene. A content of the conductive agent is, for example, greater than or equal to 0.01 parts by mass and less than or equal to 10 parts by mass, and preferably greater than or equal to 0.05 parts by mass and less than or equal to 5 parts by mass, based on 100 parts by mass of the positive electrode active material.

Examples of the binder included in the positive electrode mixture layer 31 include fluorine-containing resins such as polytetrafluoroethylene (PTFE) and polyvinylidene fluoride (PVdF), polyacrylonitrile (PAN), a polyimide, an acrylic resin, and a polyolefin. These resins may be used in combination with carboxymethylcellulose (CMC) or a salt thereof, polyethylene oxide (PEO), and the like. A content of the binder is, for example, greater than or equal to 0.1 parts by mass and less than or equal to 10 parts by mass, and preferably greater than or equal to 0.5 parts by mass and less than or equal to 5 parts by mass, based on 100 parts by mass of the positive electrode active material.

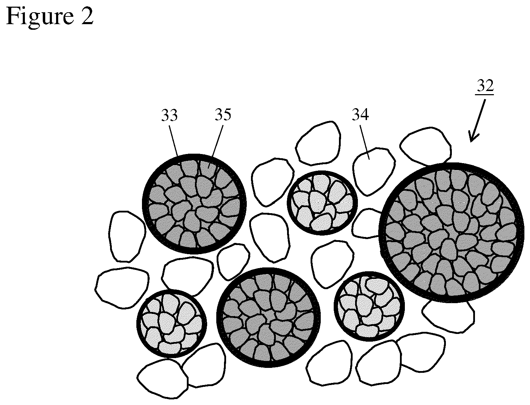

FIG. 2 is a view schematically illustrating particle cross sections of a positive electrode active material 32 of an example of an embodiment. As illustrated in FIG. 2, the positive electrode active material 32 includes a first lithium-containing transition metal composite oxide 33 (hereinafter, referred to as "first composite oxide 33") and a second lithium-containing transition metal composite oxide 34 (hereinafter, referred to as "second composite oxide 34"). The positive electrode mixture layer 31 of the present embodiment contains substantially only the first and second composite oxides 33 and 34 as the positive electrode active material 32. The positive electrode mixture layer may contain a third lithium-containing transition metal composite oxide within a range not impairing the object of the present disclosure. An example of the third composite oxide includes a composite oxide not satisfying a requirement of the particle diameter described later.

The first and second composite oxides 33 and 34 are of particles of a composite oxide containing metal elements such as Ni, Co, Mn, and Al in addition to Li. The first and second composite oxides 33 and 34 have, for example, a layered rock-salt structure. Examples of the layered rock-salt structure may include a layered rock-salt structure belonging to the space group R-3m and a layered rock-salt structure belonging to the space group C2/m. Among these, the layered rock-salt structure belonging to the space group R-3m is preferable from the viewpoints of increase in capacity and stability of the crystal structure.

The first and second composite oxides 33 and 34 are preferably composite oxides represented by the composition formula LiₓNi_{y}M_{(1-y)}O₂, wherein 0.95 ≤ x ≤ 1.40, 0.4 ≤ y ≤ 1.0, and M represents at least one selected from the group consisting of Li, Mn, Co, Ca, Sr, Al, Ti, Zr, Fe, Nb, Ta, W, Mo, Si, Bi, B, P, V, Eu, La, and Sb. Among these, at least one selected from the group consisting of Mn, Co, and Al is preferably included as the metal element M.

The first and second composite oxides 33 and 34 contain Ni at preferably greater than or equal to 70 mol%, and more preferably greater than or equal to 80 mol% relative to a total number of moles of the metal elements excluding Li from the viewpoints of increase in capacity, and the like. Although a detail will be described later, the effect by controlling the sectional area ratio of the primary particles constituting each of the composite oxides becomes more remarkable when a composite oxide with a high Ni content rate is used. The content rate of Ni may be preferably greater than or equal to 85 mol%, and may be greater than or equal to 90 mol% relative to the total number of moles of the metal elements excluding Li. An upper limit of the Ni content rate is, for example, 95 mol%.

For example, the first and second composite oxides 33 and 34 may have substantially same composition, or may have compositions different from each other within a range satisfying the above composition formula. The content rates of the elements constituting the composite oxide may be measured by an inductively coupled plasma atomic emission spectrometer (ICP-AES), an electron probe micro analyzer (EPMA), an energy dispersive X-ray analyzer (EDX), or the like.

The first composite oxide 33 is of secondary particles each formed by aggregation of primary particles 35 having an average particle diameter of less than or equal to 0.3 µm. The second composite oxide 34 includes primary particles of greater than or equal to 0.5 µm, and is also called as "non-aggregated particles" or "single particles". The second composite oxide 34 is of, for example, single-crystal primary particles having no particle boundary thereinside. The second composite oxide 34 may include less than or equal to ten or less than or equal to five primary particles. The crystallinity of the composite oxide may be determined by using a scanning ion microscope (SICM). The primary particles constituting one particle of the composite oxide adhere to each other with strength so as not to be disintegrated by applying a strong force during, for example, preparing the positive electrode mixture slurry.

A median diameter (D50a) on a volumetric basis of the first composite oxide 33 is larger than a median diameter (D50b) on a volumetric basis of the second composite oxide 34 (D50a > D50b). That is, in the first composite oxide 33, the particle diameter of the primary particles 35 constituting the first composite oxide 33 is smaller than the particle diameter of the primary particles constituting the second composite oxide 34. The particle diameter of the entire particles is larger than the particle diameter of the second composite oxide 34. If this requirement is not satisfied, at least one of the high capacity and the high durability cannot be achieved.

D50a and D50b of the first and second composite oxides 33 and 34 mean a particle diameter at which a cumulative frequency is 50% from a smaller particle diameter side in a particle size distribution on a volumetric basis. The particle size distribution of the first and second composite oxides 33 and 34 may be measured by using a laser diffraction-type particle size distribution measuring device (for example, MT3000II, manufactured by MicrotracBEL Corp.) with water as a dispersion medium.

A ratio (D50a/D50b) of D50a of the first composite oxide 33 to D50b of the second composite oxide 34 may be any as long as it is larger than 1.0, but preferably greater than or equal to 1.5 and less than or equal to 10 (1.5 ≤ (D50a/D50b) ≤ 10). When the requirement of 1.5 ≤ (D50a/D50b) ≤ 10 is satisfied, both the high capacity and the high durability are easily achieved compared with a case not satisfying this requirement. D50a/D50b is more preferably greater than or equal to 2.0 and less than or equal to 7.0, and particularly preferably greater than or equal to 2.5 and less than or equal to 4.0.

D50a of the first composite oxide 33 is, for example, greater than or equal to 10 µm and less than or equal to 30 µm, preferably greater than or equal to 12 µm and less than or equal to 25 µm, and more preferably greater than or equal to 15 µm and less than or equal to 20 µm. D50b of the second composite oxide 34 is, for example, greater than or equal to 0.5 µm and less than 10 µm, preferably greater than or equal to 1 µm and less than or equal to 8 µm, and more preferably greater than or equal to 3 µm and less than or equal to 7 µm. When D50a and D50b of each of the composite oxides are within these ranges and D50a/D50b satisfies the above requirement, both the high capacity and the high durability are easily achieved.

The particle diameter of the primary particles constituting the first and second composite oxides 33 and 34 may be determined by photographing the particle cross section with a scanning electron microscope (SEM) and analyzing the SEM image. For example, the positive electrode or the composite oxide is embedded in a resin, the cross section is produced by cross-section polisher (CP) processing, and this cross section is photographed with an SEM. From the SEM image, 50 primary particles are randomly selected to observe the particle boundary, an area of each of the 50 primary particles is determined, and a diameter of a circle corresponding to the area is determined to specify an average value thereof as the average particle diameter.

The average particle diameter of the primary particles 35 constituting the first composite oxide 33 is, as noted above, less than or equal to 0.3 µm, more preferably greater than or equal to 0.02 µm and less than or equal to 0.20 µm, and particularly preferably greater than equal to 0.05 µm and less than or equal to 0.15 µm. The particle diameter of the primary particles constituting the second composite oxide 34 is greater than or equal to 0.5 µm, and in other words, the composite oxide particles including the primary particles having a particle diameter of greater than or equal to 0.5 µm are the second composite oxide 34. The average particle diameter of the primary particles of the second composite oxide 34 is preferably greater than or equal to 0.8 µm, more preferably greater than equal to 0.8 µm and less than or equal to 4.0 µm, and particularly preferably greater than equal to 1.0 µm and less than or equal to 3.0 µm.

A ratio (Sb/Sa) of an average sectional area (Sb) of the primary particles constituting the second composite oxide 34 to an average sectional area (Sa) of the primary particles 35 constituting the first composite oxide 33 is greater than or equal to 80 and less than or equal to 600 (80 ≤ (Sb/Sa) ≤ 600). That is, the sectional area of each of the primary particles of the second composite oxide 34 is greater than or equal to 80 times and less than or equal to 600 times larger than the sectional area of each of the primary particles 35 of the first composite oxide 33 in average. When this requirement is satisfied, the non-aqueous electrolyte secondary battery having high capacity and excellent durability can be achieved.

For example, if the sectional area of the primary particles 35 of the first composite oxide 33 is increased to set Sb/Sa to be less than 80 without change in the sectional area of the primary particles of the second composite oxide 34, the cycle characteristics are considered to be deteriorated by generation of a new surface due to particle cracking in charge and discharge. From the viewpoint of the cycle characteristics, a smaller average sectional area (Sa) of the primary particles 35 is preferable, but an excessively small Sa tends to decrease the capacity.

Although rather varying depending on the composition of the composite oxide, a preferable range of Sb/Sa is greater than or equal to 100 and less than or equal to 500, more preferably greater than or equal to 150 and less than or equal to 400, and particularly preferably greater than or equal to 200 and less than or equal to 350. The average sectional area (Sa) of the primary particles 35 of the first composite oxide 33 is, for example, greater than or equal to 0.001 µm² and less than or equal to 0.050 µm², and preferably greater than or equal to 0.005 µm² and less than or equal to 0.025 µm². The average particle diameter (Sb) of the primary particles of the second composite oxide 34 is, for example, greater than or equal to 0.50 µm² and less than or equal to 5.0 µm², and preferably greater than or equal to 1.0 µm² and less than or equal to 4.0 µm².

A mixing ratio of the first and second composite oxides 33 and 34 is not particularly limited. The content of the first composite oxide 33 may be, for example, greater than or equal to 10% and less than or equal to 90% of a total mass of the positive electrode active material 32, and the content of the first composite oxide 33 is preferably greater than or equal to the content of the second composite oxide 34. The first composite oxide 33 is preferably contained at an amount of greater than or equal to 50% and less than or equal to 90%, and more preferably contained at an amount of greater than or equal to 60% and less than or equal to 85% relative to the total mass of the positive electrode active material 32. When the content of the first composite oxide 33 is within this range, both the high capacity and the durability are easily achieved. In the present embodiment, substantially only the first and second composite oxides 33 and 34 are contained as the positive electrode active material 32, and thereby the content of the second composite oxide 34 is preferably greater than or equal to 10% and less than or equal to 50%, and more preferably greater than or equal to 15% and less than or equal to 40% of the total mass of the positive electrode active material 32.

The first and second composite oxides 33 and 34 may be synthesized by a method described in Example described later. The first composite oxide 33 may be synthesized by, for example, setting a calcination temperature to be lower than in synthesizing the second composite oxide 34. In synthesizing the first composite oxide 33, an element for inhibiting crystal growth may be added. The particle diameter and the cross section of the primary particles vary depending on a type of the added element. For example, in a lithium-containing transition metal composite oxide containing 80 mol% of Ni and 20 mol% of Mn relative to the metal elements excluding Li, adding Ca, Sr, Al, Ti, Zr, Fe, Nb, Ta, W, Mo, Si, Bi, B, P, V, Eu, La, Sb, and the like at greater than or equal to 0.1 mol% and less than or equal to 1 mol% tends to decrease the cross section of the primary particles compared with a case without adding these.

Note that the mixing ratio of the first and second composite oxides 33 and 34 may vary in a thickness direction of the positive electrode mixture layer 31. As an example, when the positive electrode mixture layer 31 is bisected in the thickness direction and defined as a first region and a second region in this order from the surface side of the positive electrode 11, the mixing ratio may vary in the first region and the second region. In the present embodiment, the mixing ratio of the first and second composite oxides 33 and 34 is substantially uniform in the entire region of the positive electrode mixture layer 31.

### [Negative Electrode]

The negative electrode 12 comprises a negative electrode core 40 and a negative electrode mixture layer 41 formed on a surface of the negative electrode core 40. For the negative electrode core 40, a foil of a metal stable within a potential range of the negative electrode 12, such as copper and a copper alloy, a film in which such a metal is disposed on a surface layer, and the like may be used. An example of the negative electrode core 40 is foil of copper or a copper alloy having a thickness of greater than or equal to 5 µm and less than or equal to 15 µm. The negative electrode mixture layer 41 includes the negative electrode active material and a binder, and is preferably formed on both the surfaces of the negative electrode core 40. A thickness of the negative electrode mixture layer 41 is, for example, greater than or equal to 30 µm and less than or equal to 150 µm on one side of the negative electrode core 40. The negative electrode 12 may be produced by applying a negative electrode mixture slurry including the negative electrode active material, the binder, and the like on the negative electrode core 40, and drying and then compressing the coating film to form the negative electrode mixture layer 41 on both the surfaces of the negative electrode core 40.

The negative electrode mixture layer 41 typically includes a carbon-based material to reversibly occlude and release lithium ions, as the negative electrode active material. A preferable carbon-based material is a graphite such as: a natural graphite such as flake graphite, massive graphite, and amorphous graphite; or an artificial graphite such as massive artificial graphite (MAG) and graphitized mesophase-carbon microbead (MCMB). For the negative electrode active material, an active material including at least one of: an element that forms an alloy with Li, such as Si and Sn; and a material containing such an element may be used. A preferable example of this active material includes a Si-containing material in which a fine Si phase is dispersed in an ion-conductive phase such as a SiO₂ phase, a silicate phase such as lithium silicate, and an amorphous carbon phase. As the negative electrode active material, graphite and the Si-containing material may be used in combination.

For the binder included in the negative electrode mixture layer 41, fluorine-containing resins such as PTFE and PVdF, PAN, a polyimide, an acrylic resin, a polyolefin, styrene-butadiene rubber (SBR), and the like may be used. The negative electrode mixture layer 41 may include CMC or a salt thereof, polyacrylic acid (PAA) or a salt thereof, polyvinyl alcohol (PVA), and the like. A content of the binder is, for example, greater than or equal to 0.1 parts by mass and less than or equal to 10 parts by mass, and preferably greater than or equal to 0.5 parts by mass and less than or equal to 5 parts by mass, based on 100 parts by mass of the negative electrode active material. With the negative electrode mixture layer 41, conductive agents such as carbon black and carbon nanotube may be added.

### [Separator]

For the separator 13, a porous sheet having an ion permeation property and an insulation property is used. Specific examples of the porous sheet include a fine porous thin film, a woven fabric, and a nonwoven fabric. For a material of the separator 13, a polyolefin such as polyethylene, and polypropylene, cellulose, and the like are preferable. The separator 13 may have a single-layer structure or a multilayer structure. On a surface of the separator 13, a resin layer having high heat resistance, such as an aramid resin, may be formed.

On a boundary between the separator 13 and at least one selected from the positive electrode 11 and the negative electrode 12, a filler layer including an inorganic filler may be formed. Examples of the inorganic filler include oxides containing metal elements such as Ti, Al, Si, and Mg, and a phosphoric acid compound. The filler layer may be formed by applying a slurry containing the filler on the surface of the positive electrode 11, the negative electrode 12, or the separator 13.

### EXAMPLES

Hereinafter, the present disclosure will be described in more detail with Examples, but the present disclosure is not limited to these Examples.

### <Example 1>

### [Synthesis of First Composite Oxide]

First, a composite hydroxide (Ni_{0.8}Mn_{0.2}(OH)₂) including Ni and Mn at a mole ratio of 8:2 was synthesized by a coprecipitation method. The obtained composite hydroxide was heated in the air at 700°C for 2 hours to be converted into a composite oxide (Ni_{0.8}Mn_{0.2}O₂). Into the obtained composite oxide (Ni_{0.8}Mn_{0.2}O₂), WO₃ at 0.002 mol per mole of a total of Ni and Mn was mixed, lithium hydroxide monohydrate (LiOH·H₂O) at 1.11 mol per mole of a total of Ni, Mn, and W was further mixed, and the obtained mixture was calcined. Specifically, the mixture was calcined under an oxygen flow (at a flow rate of 5 L/min per kilogram of the mixture) at an oxygen concentration of 95% from room temperature to 650°C at a heating rate of 2.0°C/min, and then calcined from 650°C to 820°C at a heating rate of 1°C/min to obtain a first composite oxide. This composite oxide was of secondary particles each formed by aggregation of many primary particles, and a composition and D50 thereof, and an average sectional area (Sa) of the primary particles were as follows.
D50: 16.2 µm
Sa: 0.022 µm²

### [Synthesis of Second Composite Oxide]

First, a composite hydroxide (Ni_{0.8}Mn_{0.2}(OH)₂) including Ni and Mn at a mole ratio of 8:2 was synthesized by a coprecipitation method. The obtained composite hydroxide was heated in the air at 700°C for 2 hours to be converted into a composite oxide (Ni_{0.8}Mn_{0.2}O₂). Further, lithium hydroxide monohydrate (LiOH·H₂O) at 1.11 mol per mole of a total of Ni and Mn was mixed, and the obtained mixture was calcined. Specifically, the mixture was calcined under an oxygen flow (at a flow rate of 5 L/min per kilogram of the mixture) at an oxygen concentration of 95% from room temperature to 650°C at a heating rate of 2.0°C/min, and then calcined from 650°C to 870°C at a heating rate of 1°C/min to obtain a second composite oxide. This composite oxide was of particles (non-aggregated particles) including one or less than or equal to ten primary particles, and a composition and D50 thereof, and an average sectional area (Sb) of the primary particles were as follows.
D50: 5.43 µm
Sb: 2.02 µm²

### [Production of Positive Electrode]

As a positive electrode active material, the first composite oxide and the second composite oxide were mixed at a mass ratio of 70:30 for use. This positive electrode active material, acetylene black, and polyvinylidene fluoride (PVdF) were mixed at a mass ratio of 98:1:1, and N-methyl-2-pyrrolidone (NMP) was used as a dispersion medium to prepare a positive electrode mixture slurry. Then, the positive electrode mixture slurry was applied on both surfaces of a positive electrode core composed of aluminum foil, the coating film was dried and compressed, and then the positive electrode core was cut to a predetermined electrode size to obtain a positive electrode in which a positive electrode mixture layer was formed on both the surfaces of the positive electrode core.

### [Production of Negative Electrode]

As a negative electrode active material, graphite powder and a Si-containing material represented by SiOₓ were mixed at a mass ratio of 95:5 for use. This negative electrode active material, sodium carboxymethylcellulose (CMC-Na), and a dispersion of styrene-butadiene rubber (SBR) were mixed at a solid-content mass ratio of 98:1:1, and water was used as a dispersion medium to prepare a negative electrode mixture slurry. Then, the negative electrode mixture slurry was applied on both surfaces of a negative electrode core composed of copper foil, the coating film was dried and compressed, and then the negative electrode core was cut to a predetermined electrode size to obtain a negative electrode in which a negative electrode mixture layer was formed on both the surfaces of the negative electrode core.

### [Preparation of Non-Aqueous Electrolyte Liquid]

Ethylene carbonate (EC), methyl ethyl carbonate (MEC), and dimethyl carbonate (DMC) were mixed at volume ratio (25°C) of 20:5:75. Into this mixed solvent, LiPF₆ was dissolved so that the concentration was 1.4 mol/L to prepare a non-aqueous electrolyte liquid.

### [Production of Non-Aqueous Electrolyte Secondary Battery]

A lead was attached to each of the above positive electrode and the negative electrode, and the positive electrode and the negative electrode were spirally wound via a separator to obtain a wound electrode assembly. This electrode assembly was housed in a bottomed cylindrical exterior housing can, the negative electrode lead was welded to a bottom inner surface of the exterior housing can, and the positive electrode lead was welded to an internal terminal plate of a sealing assembly. Thereafter, the above non-aqueous electrolyte liquid was injected into the exterior housing can, an opening edge of the exterior housing can was caulked with the sealing assembly to produce a cylindrical non-aqueous electrolyte secondary battery.

### <Example 2>

A non-aqueous electrolyte secondary battery was produced in the same manner as in Example 1 except that, in the synthesis of the first composite oxide, the amount of WO₃ added was changed to 0.0025 mol per mole of the total of Ni and Mn to set the average sectional area (Sa) of the primary particles constituting the secondary particles to 0.016 µm². In this case, the sectional area ratio (Sb/Sa) of the primary particles constituting each of the composite oxides was 126.3.

### <Example 3>

A non-aqueous electrolyte secondary battery was produced in the same manner as in Example 1 except that, in the synthesis of the first composite oxide, the amount of WO₃ added was changed to 0.005 mol per mole of the total of Ni and Mn to set the average sectional area (Sa) of the primary particles constituting the secondary particles to 0.009 µm². In this case, the sectional area ratio (Sb/Sa) of the primary particles constituting each of the composite oxides was 224.4.

### <Example 4>

A non-aqueous electrolyte secondary battery was produced in the same manner as in Example 1 except that, in the synthesis of the first composite oxide, the amount of WO₃ added was changed to 0.005 mol per mole of the total of Ni and Mn, and Nb was added at 0.0025 per mole of the total of Ni and Mn to set the average sectional area (Sa) of the primary particles constituting the secondary particles to 0.006 µm². In this case, the sectional area ratio (Sb/Sa) of the primary particles constituting each of the composite oxides was 336.7.

### <Example 5>

A non-aqueous electrolyte secondary battery was produced in the same manner as in Example 3 except that a composite oxide represented by the composition formula LiNi₈₈Co₉Mn₃O₂ and having D50 of 5.43 µm and an average sectional area (Sb) of the primary particles constituting the secondary particles of 3.00 µm² was used as the second composite oxide. In this case, the sectional area ratio (Sb/Sa) of the primary particles constituting each of the composite oxides was 333.3.

### <Example 6>

A non-aqueous electrolyte secondary battery was produced in the same manner as in Example 4 except that a composite oxide represented by the composition formula LiNi₈₈Co₉Mn₃O₂ and having D50 of 5.43 µm and an average sectional area (Sb) of the primary particles constituting the secondary particles was 3.00 µm² was used as the second composite oxide. In this case, the sectional area ratio (Sb/Sa) of the primary particles constituting each of the composite oxides was 500.0.

### <Comparative Example 1>

A positive electrode active material and a non-aqueous electrolyte secondary battery were produced in the same manner as in Example 1 except that, in the synthesis of the first composite oxide, WO₃ was not added, the mixture was calcined at a heating rate of 2.0°C/min from room temperature to 650°C and then calcined at a heating rate of 1°C/min from 650°C to 840°C to set the average sectional area (Sa) of the primary particles constituting the secondary particles to 0.069 µm². In this case, the sectional area ratio (Sb/Sa) of the primary particles constituting each of the composite oxides was 29.3.

### <Comparative Example 2>

A positive electrode active material and a non-aqueous electrolyte secondary battery were produced in the same manner as in Example 1 except that, in the synthesis of the first composite oxide, WO₃ was not added, the mixture was calcined at a heating rate of 2.0°C/min from room temperature to 650°C and then calcined at a heating rate of 1°C/min from 650°C to 820°C to set the average sectional area (Sa) of the primary particles constituting the secondary particles to 0.027 µm². In this case, the sectional area ratio (Sb/Sa) of the primary particles constituting each of the composite oxides was 74.8.

### <Comparative Example 3>

A positive electrode active material and a non-aqueous electrolyte secondary battery were produced in the same manner as in Example 1 except that a first composite oxide having D50 of 11.9 µm and an average sectional area (Sa) of the primary particles constituting the secondary particles was 0.063 µm² was singly used as the positive electrode active material.

On each of the batteries of Examples and Comparative Examples, initial charge capacity, initial discharge capacity, and capacity retention after a cycle test were evaluated by the following methods. Table 1 shows the evaluation results together with physical properties of the positive electrode active material. In Table 1, Examples 1 to 6 are shown as A1 to A6, and Comparative Examples 1 to 3 are shown as B1 to B3.

### [Evaluation of Charge Discharge Capacities]

Under a temperature environment of 25°C, the evaluation-target battery was charged at a constant current of 0.2 C until a battery voltage reached 4.5 V, and then charged at a current voltage of 4.5 V until a terminal current reached 0.02 C. Thereafter, the battery was discharged at a constant current of 0.2 C until the battery voltage reached 2.5 V. From the charge-discharge curve in this time, a charge capacity and a discharge capacity per gram of the positive electrode active material were calculated. The evaluation results shown in Table 1 are values relative to a value of the battery of Comparative Example 1 (B1) being 100.

### [Evaluation of Cycle Characteristics (Capacity Retention)]

The above charge and discharge were performed with 50 cycles to calculate the capacity retention with the following formula. Capacity retention = (Discharge capacity at 50th cycle / Discharge capacity at 1st cycle) × 100

**[Table 1]**

| | First composite oxide | | Second composite oxide | | Sb/Sa | Battery performance | | |
|---|---|---|---|---|---|---|---|---|
| | D50 (µm) | Sa (µm²) | D50 (µm) | Sb (µm²) | | Charge capacity | Discharge capacity | Capacity retention |
| A1 | 16.2 | 0.022 | 5.43 | 2.02 | 91.8 | 100.9 | 103.6 | 95.5% |
| A2 | 16.9 | 0.016 | 5.43 | 2.02 | 126.3 | 101.7 | 104.3 | 95.7% |
| A3 | 16.9 | 0.009 | 5.43 | 2.02 | 224.4 | 102.4 | 106.0 | 95.5% |
| A4 | 16.9 | 0.006 | 5.43 | 2.02 | 336.7 | 101.7 | 103.8 | 95.8% |
| A5 | 16.9 | 0.009 | 4.54 | 3.00 | 333.3 | 103.1 | 107.1 | 97.3% |
| A6 | 16.9 | 0.006 | 4.54 | 3.00 | 500.0 | 102.4 | 107.1 | 97.1% |
| B1 | 16.2 | 0.069 | 5.43 | 2.02 | 29.3 | 100 | 100 | 93.2% |
| B2 | 16.9 | 0.027 | 5.43 | 2.02 | 74.8 | 101.0 | 103.5 | 92.7% |
| B3 | 11.9 | 0.063 | - | - | - | 101.6 | 103.3 | 91.9% |

As shown in Table 1, all the batteries of Examples 1 to 6 have high capacity retention after the cycle test and excellent cycle characteristics compared with the batteries of Comparative Examples 1 to 3. In addition, the batteries of Examples have excellent cycle characteristics while keeping high capacity, and achieve both the high capacity and the high durability.

In contrast, the battery of Comparative Example 3, which singly uses the first composite oxide (secondary particles) as the positive electrode active material, has high charge-discharge capacity but low capacity retention after the cycle test compared with the batteries of Examples. Similarly, deterioration of cycle characteristics was observed on the batteries of Comparative Examples 1 and 2, which use the positive electrode active material with the average sectional area ratio (Sb/Sa) of the primary particles of less than 80.

### REFERENCE SIGNS LIST

10 Non-aqueous electrolyte secondary battery, 11 Positive electrode, 12 Negative electrode, 13 Separator, 14 Electrode assembly, 16 Exterior housing can, 17 Sealing assembly, 18, 19 Insulating plate, 20 Positive electrode lead, 21 Negative electrode lead, 22 Grooved portion, 23 Internal terminal plate, 24 Lower vent member, 25 Insulating member, 26 Upper vent member, 27 Cap, 28 Gasket, 30 Positive electrode core, 31 Positive electrode mixture layer, 32 Positive electrode active material, 33 First composite oxide, 34 Second composite oxide, 35 Primary particle, 40 Negative electrode core, 41 Negative electrode mixture layer

## Claims

1. A positive electrode active material for a non-aqueous electrolyte secondary battery, including:
a first lithium-containing transition metal composite oxide; and
a second lithium-containing transition metal composite oxide, wherein
the first lithium-containing transition metal composite oxide is of secondary particles each formed by aggregation of primary particles having an average particle diameter of less than or equal to 0.3 µm,
the second lithium-containing transition metal composite oxide includes primary particles of greater than or equal to 0.5 µm,
a median diameter (D50a) on a volumetric basis of the first lithium-containing transition metal composite oxide is larger than a median diameter (D50b) on a volumetric basis of the second lithium-containing transition metal composite oxide (D50a > D50b), and
a ratio (Sb/Sa) of an average sectional area (Sb) of the primary particles constituting the second lithium-containing transition metal composite oxide to an average sectional area (Sa) of the primary particles constituting the first lithium-containing transition metal composite oxide is greater than or equal to 80 and less than or equal to 600 (80 ≤ (Sb/Sa) ≤ 600).

2. The positive electrode active material for a non-aqueous electrolyte secondary battery according to claim 1, wherein a ratio (D50a/D50b) of the median diameter (D50a) on a volumetric basis of the first lithium-containing transition metal composite oxide to the median diameter (D50b) on a volumetric basis of the second lithium-containing transition metal composite oxide is greater than or equal to 1.5 and less than or equal to 10 (1.5 ≤ (D50a/D50b) ≤ 10).

3. The positive electrode active material for a non-aqueous electrolyte secondary battery according to claim 1 or 2, wherein the first and second lithium-containing transition metal composite oxides are composite oxides represented by the composition formula LᵢₓNi_{y}M_{(1-y)}O₂, wherein 0.95 ≤ x ≤ 1.40, 0.4 ≤ y ≤ 1.0, and M represents at least one selected from the group consisting of Li, Mn, Co, Ca, Sr, Al, Ti, Zr, Fe, Nb, Ta, W, Mo, Si, Bi, B, P, V, Eu, La, and Sb.

4. The positive electrode active material for a non-aqueous electrolyte secondary battery according to any one of claims 1 to 3, wherein the first lithium-containing transition metal composite oxide is included at an amount of greater than or equal to 50% and less than or equal to 90% relative to a total mass of the positive electrode active material.

5. A non-aqueous electrolyte secondary battery, comprising:
a positive electrode including the positive electrode active material according to any one of claims 1 to 4;
a negative electrode; and
a non-aqueous electrolyte.
